# FASCICULE DE BREVET EUROPEEN

(11) **EP 0 629 948 B1**
(45) Date de publication et mention de la délivrance du brevet: **01.09.1999**
(21) Numéro de dépôt: 94401320.0
(22) Date de dépôt: 13.06.1994
(51) Int. Cl.: G06F 9/46

(54) **Procédé de gestion des accès concurrents à une mémoire par plusieurs utilisateurs**
Verfahren zur verwaltung gleichzeitiger Zugriffe mehrerer Benutzer auf einen Speicher.
Method for managing concurrent accesses to a memory by several users.

(30) Priorité: 17.06.1993 FR 9307315
(43) Date de publication de la demande: 21.12.1994
(73) Titulaire: ALCATEL, 75008 Paris (FR)
(72) Inventeur: Donnan, Gary, F-28700 Oysonville (FR)
(74) Mandataire: Lamoureux, Bernard

(56) Documents cités:
- WESCON TECHNICAL PAPERS, 30 Octobre 1984, NORTH HOLLYWOOD US pages 1 - 16, XP211766 BOB BEIMS 'Multiprocessing capabilities of the MC68020 32-bit processor'
- '386 DX microprocessor programmer's reference manual' 1990 , INTEL, SANTA CLARA, CA, USA * page 17-182 *
- 'Microprocessor and peripheral handbook, Vol. I, microprocessor' 1988 , INTEL , SANTA CLARA, CA, USA * page 2-11, colonne de droite, ligne 14 - ligne 33 *
- COMPUTER JOURNAL, vol.29, no.5, 1986, LONDON GB pages 423 - 429 R.D. DOWSING ET AL. 'Programming a bounded buffer using the object and path expression constructs of Path Pascal'
- IBM TECHNICAL DISCLOSURE BULLETIN., vol.25, no.9, Février 1983, NEW YORK US pages 4683 - 4689 'FIFO stack operations'

## Description

L'invention porte sur un procédé de gestion des accès concurrents à une mémoire par plusieurs utilisateurs se partageant le temps de traitement d'un processeur de traitement de données pour faire exécuter chacune une séquence d'instructions dudit processeur afin de lire ou écrire des données dans des zones mémoire de ladite mémoire à partir d'un index ayant une valeur identifiant une zone mémoire dans ladite mémoire.

Un procédé analogue, pour une architecture multiprocesseurs, est connu du bulletin technique de la société Digital Equipment Corporation du 2 octobre 1991 intitulé "A Methodology for Implementing Highly Concurrent Data Objects". Il est destiné, en premier lieu, pour la gestion des accès concurrents à une mémoire par plusieurs processeurs dans un contexte de tolérance aux fautes. L'invention porte plus particulièrement sur un procédé de gestion des accès concurrents à une mémoire par plusieurs activités (connues sous le nom de "threads") dans un contexte uniprocesseur.

Ce type de traitement multi-activités permet de gérer des échanges très rapides de données entre des tâches asynchrones émettrices et réceptrices de telles données. Chaque donnée émise par une tâche est récupérée par une activité qui l'enregistre dans une zone de la mémoire identifiée par la valeur d'un index d'écriture. Lorsqu'une tâche requiert une donnée, une activité procède à la lecture d'une donnée dans une zone de la mémoire identifiée par un index de lecture. A chaque phase de lecture ou d'écriture dans la mémoire, l'index de lecture ou l'index d'écriture est mis à jour pour la prochaine opération de lecture ou d'écriture.

Le problème principal de l'utilisation d'une mémoire partagée entre plusieurs activités concurrentes est d'assurer l'intégrité des données échangées entre les activités. Ce problème peut se présenter ainsi qu'il suit.

Une activité A commence à écrire une donnée dans une zone de la mémoire identifiée par l'index d'écriture.

Une activité B commence peu après à écrire une donnée dans la même zone de la mémoire, l'index d'écriture n'ayant pas été mis à jour entre-temps.

Il en résulte un mélange des données des deux activités A et B puisqu'aucune des deux activités n'a pu exploiter la mémoire pour son propre compte.

Si une activité C lit la même zone mémoire, elle récupère donc une donnée qui est incohérente par rapport aux opérations d'écriture des activités A ou B.

Une solution connue du document cité précédemment est d'assurer que chaque utilisateur de la mémoire écrit ou lit une donnée dans une zone de la mémoire en faisant exécuter une séquence d'instructions atomique, c'est-à-dire une séquence d'instructions non interruptible par un autre utilisateur.

La séquence d'instructions, dans ce document, met en oeuvre une opération de positionnement d'un verrou qui si elle réussit permet à l'utilisateur qui a posé le verrou d'avoir l'exclusivité d'accès à la mémoire jusqu'à la levée du verrou par cet utilisateur. Une implémentation possible de la pose et de la levée d'un verrou en appliquant des instructions du type "store-conditional" et "load-linked" est décrit dans le document cité précédemment. Pendant qu'un utilisateur a l'exclusivité d'accès à la mémoire, les autres utilisateurs, en attente, recherchent l'accès à la mémoire.

Les inconvénients d'un tel procédé sont les suivants.

Si l'utilisateur qui a posé le verrou entre dans un cycle bouclé, les autres utilisateurs en attente d'accès à la mémoire restent bloqués. Par ailleurs, si les utilisateurs qui partagent la mémoire fonctionnent dans un cadre temps réel, le temps d'exécution d'une séquence d'instructions par un utilisateur pour accéder à la mémoire peut aller au-delà du temps de réponse imposé aux autres utilisateurs partageant l'accès à cette mémoire. Il en résulte qu'un tel procédé connu n'est pas adapté au traitement temps réel.

Dans ce procédé connu, la séquence d'instructions atomique exécutées par un processeur pour le compte d'un utilisateur inclut les opérations de lecture ou d'écriture d'une donnée dans une zone de la mémoire. Cette séquence d'instructions atomique est appelée section critique.

Le but de l'invention est de réduire au maximum la taille de cette section critique et d'éviter le phénomène de blocage des utilisateurs en attente d'accès à la mémoire dans le cadre d'une architecture uniprocesseur.

A cet effet, l'invention a pour objet un procédé de gestion des accès concurrents à une mémoire par plusieurs utilisateurs, caractérisé en ce qu'il est mis en oeuvre dans ladite séquence d'instructions les opérations suivantes et dans l'ordre :
a) enregistrement de la valeur de l'index dans un premier registre mémoire,
b) sommation du contenu du premier registre mémoire avec une valeur d'incrément,
c) enregistrement du résultat de la sommation dans un second registre mémoire,
d) permutation atomique de la valeur de l'index avec le contenu du second registre,
e) si le contenu du second registre mémoire est identique au contenu du premier registre, alors prendre le contenu du premier registre en tant que valeur courante d'index, sinon recommencer les opérations a), b), c), d), e).

Contrairement au procédé connu, la section critique est limitée à l'opération d) de mise à jour de l'index. Les opérations de lecture ou d'écriture dans la mémoire par un utilisateur sont mises en oeuvre en dehors de la section critique. Les défauts de zone mémoire libre ou de zone mémoire occupée peuvent donc être gérés par chaque utilisateur en dehors de la section critique.

Le procédé selon l'invention ne comporte aucun verrouillage explicite si la permutation atomique est réalisée par une seule instruction du processeur. Une telle instruction peut consister dans l'instruction "SWAP" du processeur "SPARC" de la société "Cypress Semiconductors".

La gestion de la mémoire est facilitée si la sommation dans l'opération b) est effectuée modulo la taille de la mémoire.

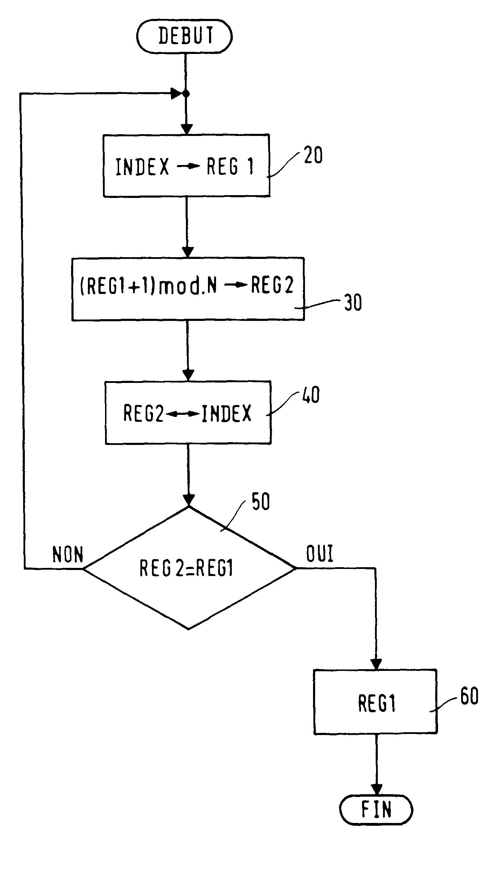

L'invention est maintenant décrite en détail ci-après en référence à la figure qui est un organigramme illustrant les opérations mis en oeuvre dans la séquence d'instructions du procédé selon l'invention.

Par la suite, on considérera que la mémoire est un buffer cyclique comprenant un nombre fixe N de zones mémoire de taille fixe. Les accès en lecture/écriture à la mémoire sont gérés à l'aide d'un index d'écriture E et d'un index de lecture L indépendant de l'index E, les valeurs des deux index identifiant une adresse (numéro de 1 à N) d'une zone mémoire de cette mémoire. Un buffer cyclique est bien connu et ne sera pas décrit plus en détail. On comprendra toutefois que les utilisateurs de la mémoire partagent les deux index L et E. Par ailleurs, le fonctionnement cyclique du buffer fait que la valeur de chaque index progresse par pas fixe, par exemple de 1, et lorsque celle-ci arrive à N elle est remise à 1. Il s'agit donc d'une sommation modulo N.

En se reportant maintenant à la figure, la séquence d'instructions permettant à un utilisateur, telle qu'une activité, d'accéder à la mémoire met en oeuvre les opérations suivantes.
a) enregistrer, en 20, la valeur courante de l'index (index L ou index E selon le cas) dans un premier registre Reg1,
b) puis sommer, en 30, le contenu du premier registre Reg1 avec une valeur d'incrément, de préférence la valeur 1, modulo la taille N de la mémoire et
c) mettre, en 30, le résultat de la sommation de l'opération précédente dans un second registre Reg2,
d) puis permuter atomiquement la valeur de l'index avec le contenu du second registre Reg2, en 40,
e) si, en 50, le contenu du second registre Reg2 est identique au contenu du premier registre Reg1, alors prendre, en 60, comme valeur courante d'index la valeur contenue dans le premier registre mémoire Reg1, sinon recommencer les opérations précédentes à partir du bloc 20.

Un exemple de séquence d'instructions pour la mise en oeuvre des opérations, a) à e) est donné ci-dessous. Ces instructions font partie de l'ensemble d'instructions du processeur "SPARC" figurant dans l'ouvrage "SPARC Instruction Set" publié par la société "Cypress Semiconductor".

Dans cet exemple "ModulatomAdd" est le nom d'une fonction logicielle qui retourne la valeur courante d'un index et met à jour la valeur de cet index.

Cette fonction a pour arguments d'entrée:
- l'index désigné par la lette i.
- l'incrément d'index désigné par la lettre "j"
- la taille de la mémoire en nombre N de zones mémoire désignée par "mod".

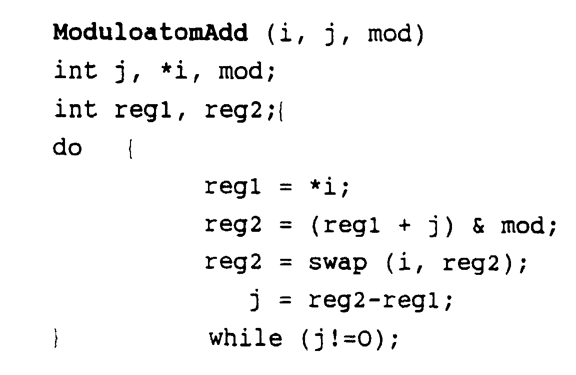

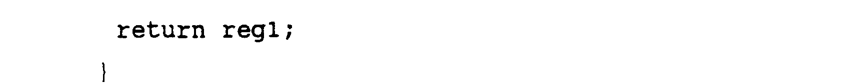

La section critique comprend que la seule instruction "swap" du processeur "SPARC". La taille de la mémoire en nombre de zones mémoire doit être choisie en fonction du nombre d'accès en lecture et en écriture à cette mémoire par unité de temps. Les problèmes de débordement de la mémoire peuvent être réglés par l'adjonction de zones mémoires supplémentaires chaînées entre elles par des pointeurs d'adresses classiques en soi, de manière à étendre dynamiquement la capacité de la mémoire. Il est entendu, qu'après récupération d'une valeur courante d'index, chaque activité doit contrôler que la zone mémoire identifiée par cette valeur courante d'index correspond à une zone libre ou une zone occupée, selon le cas, de la mémoire avant d'entreprendre une opération de lecture ou d'écriture dans cette zone mémoire.

## Revendications

1. Un procédé de gestion des accès concurrents à une mémoire par plusieurs utilisateurs se partageant le temps de traitement d'un processeur de traitement de données pour faire exécuter chacune une séquence d'instructions dudit processeur afin de lire ou écrire des données dans des zones mémoire de ladite mémoire à partir d'un index ayant une valeur identifiant une zone mémoire dans ladite mémoire, caractérisé en ce qu'il est mis en oeuvre dans ladite séquence d'instructions les opérations suivantes et dans l'ordre :
a) enregistrement de la valeur de l'index dans un premier registre mémoire (20),
b) sommation du contenu du premier registre mémoire avec une valeur d'incrément (30),
c) enregistrement du résultat de la sommation dans un second registre mémoire (30),
d) permutation atomique de la valeur de l'index avec le contenu du second registre (40),
e) si (50) le contenu du second registre mémoire est identique à l'ancienne valeur de l'index, alors prendre le contenu du premier registre en tant que valeur courante d'index, sinon recommencer les opérations a), b), c), d), e).

2. Le procédé selon la revendication 1, dans lequel la permutation atomique est réalisée par une seule instruction du processeur.

3. Le procédé selon l'une des revendications 1 ou 2, dans lequel la mémoire comporte N zones mémoire et la sommation de l'opération b) est effectuée modulo N.

## Patentansprüche

1. Verfahren zur Verwaltung von gleichzeitigen Zugriffen mehrerer Benutzer auf einen Speicher, die sich die Verarbeitungszeit eines Datenverarbeitungsprozessors teilen, um durch jeden eine Befehlssequenz des Prozessor ausführen zu lassen, um Daten in Speicherzonen des Speichers von einem Index an zu lesen oder zu schreiben, der einen Wert hat, der eine Speicherzone in dem besagten Speicher identifiziert, dadurch gekennzeichnet, dass in der Befehlssequenz die nun folgenden Operationen der Reihe nach ausgeführt werden:
a) Aufzeichnen des Wertes des Index in einem ersten Speicherregister (20),
b) Summieren des Inhaltes des ersten Speicherregisters mit einem Inkrementwert (30),
c) Aufzeichnen des Ergebnisses der Summierung in einem zweiten Speicherregister (30),
d) atomares Vertauschen des Wertes des Index mit dem Inhalt des zweiten Registers (40),
e) wenn (50) der Inhalt des zweiten Speicherregisters identisch mit dem Wert des Index ist, Verwenden des Inhalts des ersten Registers als laufender Indexwert, wenn nicht, Neubeginnen mit den Operationen a), b), c), d), e).

2. Verfahren nach Anspruch 1, in dem die atomare Vertauschung durch einen einzigen Befehl des Prozessors verwirklicht wird.

3. Verfahren nach einem der Ansprüche 1 oder 2, bei dem der Speicher N Speicherzonen umfasst und die Summierung der Operation b) modulo N ausgeführt wird.

## Claims

1. A method of managing concurrent accesses to a memory by a plurality of users sharing the processing time of a data processor so that each of them can cause a sequence of instructions to be performed by said processor for the purpose of reading or writing data in memory zones of said memory on the basis of an index whose value identifies a memory zone in said memory, the method being characterized in that the following sequence of operations is implemented in order in said sequence of instructions:
a) the value of the index is recorded in a first memory register (20);
b) the contents of the first memory register is summed with an increment value (30);
c) the result of the summing operation is recorded in a second memory register (30);
d) the index value is interchanged atomically with the contents of the second register (40);
e) if (50) the contents of the second memory register is identical to the old value of the index, then the content of the first register is taken as the current value of the index, otherwise operations a), b), c), d), and e) are performed again.

2. A method according to claim 1, in which the atomic interchange is performed by a single instruction of the processor.

3. A method according to claim 1 or 2, in which the memory includes N memory zones and the summing in operation b) is performed modulo N.
